# EUROPEAN PATENT APPLICATION

(11) **EP 1 777 468 A2**
(43) Date of publication of application: **25.04.2007**
(21) Application number: 06122453.1
(22) Date of filing: 17.10.2006
(51) Int. Cl.: F24F 13/02

(54) **Installation module for an air conditioning unit**

(30) Priority: 24.10.2005 FI 20051067
(71) Applicant: Sanhem-Konsultit OY, 01201 Vantaa (FI)
(72) Inventor: Leino, Reijo, 47520 Iitti (FI)
(74) Representative: Tanhua, Pekka Vilhelm

(57) **Abstract**

The invention relates to an installation module for an air conditioning unit, such as a cabin unit (10), comprising an adapter (2) present between an air conditioning duct (4) and the cabin unit. The adapter (2) comprises a box, which includes a duct joint (5) fitting to the air conditioning duct (4) and a gasket element (8) sealing to the cabin unit.

## Description

This invention relates to an installation module for an air conditioning unit, such as a cabin unit, comprising an adapter present between an air conditioning duct and the cabin unit.

The retrofitting of a cabin unit (a single- or dual-duct box) is effected through an opening preformed in the cabin ceiling. This same mode of installation can also be applied as the connecting box of a supply air diffuser is attached to an air conditioning duct.

The cabin unit is a single- or dual-duct high pressure terminal box, which is provided with a regulating and damping element. The single-duct unit can be provided with an after-heating radiator as the supply air is always sub-temperate. The dual-duct unit refers to a high-pressure terminal box, having hot and cold air passages connected therewith as a separate duct.

Due to the low temperature of supply air, the supply air duct is an insulated or double channel, the connection of which to a single- or dual-duct unit requires two gaskets.

When a prefabricated cabin is installed in a ship's hull at a shipyard, for reasons of height it cannot include prefitted cabin units or terminal boxes for air conditioning which would exceed the structural height of a completed cabin.

The structural height of a cabin is defined by an opening present in the ship's hull, through which the prefabricated cabin is pushed in.

Cabin units and terminal boxes are mounted subsequently on the cabin ceiling.

A problem has stemmed from the fact that cabins have been subjected to more stringent fire resistance standards, the fire rating for cabins being currently at least either B0 or B15.

It is almost impossible to provide a fire classified cabin ceiling with fire- and smoke-resistant hatches for a retrofitting operation. Interior designers are also displeased with extra hatches in the cabin ceiling.

At present, the cabin unit is provided with a hinge on one of its sides for hanging it from the hinge downwards inside the cabin. It has a duct(s) attached thereto by flexible connection hoses, after which the cabin unit is swung up and secured to the ceiling structure along the side opposite to the hinge. This is referred to as a "swing-down" mode of installation. A problem with the "swing-down" mode of installation is that the cabin unit must be connected by means of flexible hoses, because the only way of gaining access to the space between a cabin ceiling and a ship's hull is to make a fireproof hatch in the cabin ceiling. In addition to not fulfilling the fire rating of a cabin, the flexible hoses increase considerably the pressure loss of a supply air duct. The "swing-down" installation also leaves a hard-to-cover gap between the cabin unit and the cabin ceiling, which also fails to satisfy the fire rating.

It is an object of this invention to eliminate the foregoing drawbacks. An installation module of the invention is having adapter, which comprises a box, which includes a duct joint fitting to the air conditioning duct characterized in that there is a gasket element sealing between the cabin unit and the installation module. The invention enables a convenient and rapid installation of the cabin unit in a cramped and shallow space above the cabin ceiling. Various embodiments of the invention are presented in the dependent claims of the appended set of claims.

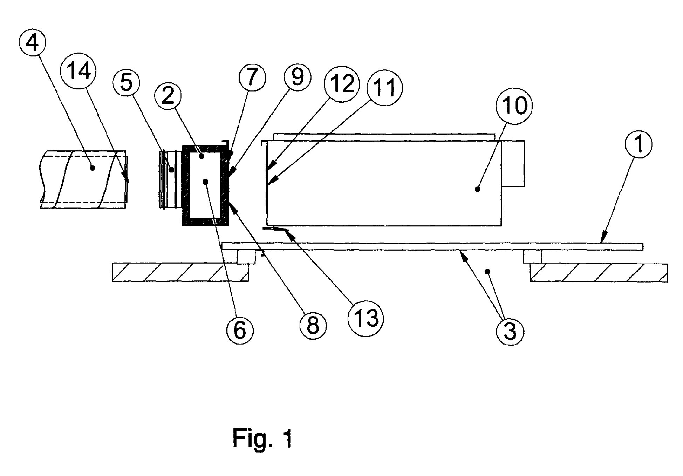

The invention will now be described by way of example with reference to the accompanying drawings, in which
- fig. 1: shows a cabin unit, an installation module and other components, disengaged from each other above a cabin ceiling, and

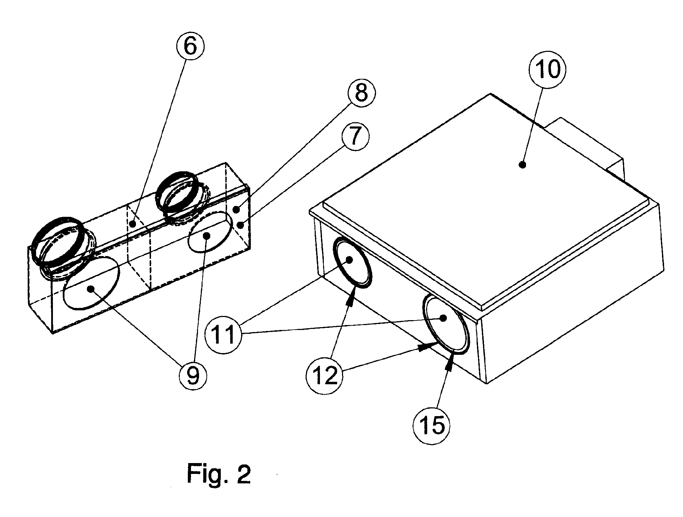

- fig. 2: shows a cabin unit and an installation module, disengaged from each other and shown in an axonometric view.

Above the cabin ceiling is fitted a mounting panel 1 at the cabin manufacturing facility. The mounting panel 1 and the cabin ceiling are provided with openings 3 for the installation of a cabin unit (10). After the cabin has been fitted in a ship's hull at the shipyard, by way of the preformed opening 3 is installed an adapter 2 to which is connected a fixed duct(s) 4.

The adapter 2 has one of its sides provided with duct joint element(s) 5, which can also be in the form of a so-called "double collar" ("collars") for an insulated supply air duct.

In a dual-duct unit, the adapter 2 is provided with a partition 6. The other side of the adapter 2 has a flat surface 7. The entire flat side is covered with a gasket 8. The gasket 8 is provided with openings 9 matching the diameter of the duct(s) 4.

The cabin unit 10 is hoisted above the cabin ceiling through the opening 3. The cabin unit 10 has no connecting collar (collars), but just an opening (openings) 11 about 3-5 mm larger than the opening 9 present in the adapter 2. This ensures that the supply air flowing through the adapter 2 does not collide in the cabin unit 10 with the sharp edge of the opening 11. Around the opening (openings) 11 of the cabin unit 10 is (are) provided a "crease" ("creases") 12 of about 0,2-1,0 mm in height, which squeezes (squeeze) into the adapter's 2 gasket 8, sealing the joint as the cabin unit 10 is tightened against the adapter 2, for example by means of a latch 13 and/or a screw.

## Claims

1. An installation module for an air conditioning unit, such as a cabin unit (10), comprising an adapter (2) present between an air conditioning duct (4) and the cabin unit, which adapter (2) comprises a box, which includes a duct joint (5) fitting to the air conditioning duct (4) **characterized in that** there is a gasket element (8) sealing between the cabin unit and the installation module, which gasket element (8) is a resilient sheet-like gasket.

2. An installation module as set forth in claim 1, **characterized in that** around an opening present in the cabin unit's (10) end extends an annular protrusion/"crease", which squeezes into the gasket (8) as the components are assembled.

3. An installation module as set forth in claim 1 or 2, **characterized in that** the cabin unit (10) carries a latch (13) for clamping the cabin unit against the adapter (2).

4. An installation module as set forth in any of the preceding claims, **characterized in that** an opening (11) present in the cabin unit (10) is 3-5 mm larger than an opening (9) present in the adapter (2).
